# EUROPEAN PATENT APPLICATION

(11) **EP 2 233 756 A1**
(43) Date of publication of application: **29.09.2010**
(21) Application number: 10157658.5
(22) Date of filing: 24.03.2010
(51) Int. Cl.: F16B 23/00, F16B 37/14, F16M 7/00

(54) **Attachment element for a protection block, protection block for said attachment element and combination between attachment element and protection block**

(30) Priority: 26.03.2009 IT UD20090061
(71) Applicant: Viteria Pettarini S.r.l., 33044 Manzano UD (IT)
(72) Inventor: Pettarini, Agostino, 33044, Manzano (UD) (IT); Ponte, Daniele, 33030, Talmassons (UD) (IT)
(74) Representative: Petraz, Gilberto Luigi

(57) **Abstract**

An attachment element for a protection block comprises at least a central body (13). The central body is provided with an attachment stem (15) able to determine the attachment of the central body (13) to a relative support surface (12), and an anchoring head (16) conformed to cooperate with the protection block and to define the reciprocal clamping of the protection block and the central body (13). The anchoring head (16) comprises at least a protruding portion (22) which extends sideways with respect to the bulk of the anchoring head (16).

## Description

### FIELD OF THE INVENTION

The present invention concerns an attachment element, such as for example a screw, a pin, or the like, to constrain a protection block to a determinate support surface, so as to substantially prevent direct contacts with said surface. The present invention also concerns the protection block used with the attachment element and to the combination between the attachment element and the protection block. In particular the present invention is applied advantageously but not restrictively to structures of the type which can be stacked, or in any case superimposed, for transportation or storage, such as for example tables and chairs, but also panels, shelves or the like, to avoid direct contact between said stacked structures.

Here and in the following description, in order to simplify the description, specific reference is made to an attachment screw applied to attach a protection block to a stackable chair, but it cannot be excluded, as we said, that the present invention can be different from a screw and effectively used even in other applications, to attach the protection block.

### BACKGROUND OF THE INVENTION

It is known that in stackable structures, in particular in chairs or other furnishing elements, blocks or other protection elements made of plastic or rubber are used, interposed between the two, to prevent the direct contact between the adjacent stacked structures from causing scratches or the wear of some surfaces, particularly those which can be seen.

Different types of protection blocks are known, both of the snap-in type which are attached on the components of the chair, and also those that can be attached to the chair by gluing or by means of hardware such as nails, rivets, screws or other.

In general, such known protection blocks are positioned and attached or fixed, to corresponding parts of the frame on the lower side of the seat part, so as to prevent direct contact between the frame of the chair above with the visible surface of the seat part of chair below, when the chairs are stacked.

In particular, known protection blocks with snap-in attachment, in order to guarantee good elasticity without the risk of breakages, are very bulky and protrude by some centimeters from the bottom of the seat part and can thus be seen when the chair is in use and not stacked.

These known protection blocks are not only expensive but, since they remain visible, partly change the aesthetic impact of the chair, and therefore they have a limited application.

Known protection blocks which are attached by glue are smaller but are difficult to position with precision; moreover they do not guarantee an effective hold over time and need complex operations to avoid excess glue or dripping of the glue itself.

Known protection blocks which are attached by means of hardware elements, even though they are widely used, mainly have disadvantages due to the complex production steps to provide specific through seatings for the hardware elements, and due to the fact that, usually, the head of the hardware element which actuates the attachment is visible and sometimes protrudes toward the outside, thus contacting, instead of the block, the surface to be preserved.

Indeed, in this type of attachment, the hardware element acts axially and by compression on the block, to keep it clamped, and therefore needs an axial, through disposition.

Moreover the through seatings for the hardware elements, precisely to prevent the latter from coming out, are very deep and define a very thin gripping segment for the hardware element. The gripping segment is often subject to breakages, and this may cause the accidental loss of the protection block.

Purpose of the present invention is to provide an attachment element for a protection block which allows to use a block of a limited size, which is simple and economic to make and does not protrude from the block itself, defining a precise, safe, clean and effective attachment of the block.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purpose, an attachment element for a protection block according to the present invention comprises at least a central body provided with an attachment stem able to determine the attachment of the central body to a relative support surface, and an anchoring head with which the protection block is able to cooperate in order to define the reciprocal clamping of the protection block and the central body.

According to a characteristic feature of the present invention, the anchoring head comprises at least a protruding portion, or lobe, which extends sideways to the bulk of the anchoring head.

The protruding portion, when brought into cooperation with the protection block, is able to effect an action of elastic deformation on the protection block, in order to maintain it, in the mounted condition, clamped with respect to the central body, both in an axial direction and in rotation.

With the present invention, the action of clamping the block to the central body of the attachment element occurs laterally and by elastic deformation, and not axially by compression as happens with traditional hardware elements.

In this way, the through seating in the protection block to house the attachment element is not necessary, and it is thus possible to provide a protection block which surrounds and completely contains the anchoring head, thus avoiding direct contact with the surface to be preserved.

Advantageously, the protection block is made of an elastically deformable material and comprises a blind housing seating having dimensions slightly smaller than or substantially equal to those of the anchoring head of the central body.

According to a variant, inside the housing seating at least a rib protruding toward the inside of the housing seating is provided, and able to increase the friction and clamping conditions of the protection block with the anchoring head.

With the present invention, the anchoring head, which does not act axially by compression but laterally by elastic deformation, allows to reduce to a minimum the risks which part of the block might break, with consequent accidental loss of the same.

The elastic deformation induced by the protruding portion is also sufficient to keep the protection block clamped on the head of the attachment element without needing to use glue, with the consequent benefits of cleaning and precision positioning.

Moreover, with the attachment element according to the present invention, it is possible to provide a protection block of even smaller size with respect to known blocks attached with hardware elements, inasmuch as there is no need to provide through seatings which are sufficiently deep to prevent the anchoring head from accidentally coming out.

According to a variant, in which the central body is a screw, the attachment stem is threaded as desired, for example according to metric standards, self-threading, gas, chipboard, cylindrical or other, whereas the anchoring head comprises at least a flat surface on which an actuation mark is provided, for example a cut, a cross, hexagonal, torx® or other, to allow the operative housing of a coordinated screwing tool.

In this solution, the same attachment element can also have an assembly function for the various components of the stackable structure to which it is applied. An example of this application is in chairs where the screw which makes up the central body not only determines the clamping of the protection block but also determines the attachment of the seat part to the frame.

According to another variant, the anchoring head comprises a knurled and/or notched external surface, to increase the reciprocal friction with the protection block, and to increase the effectiveness of the clamping effected.

### BRIEF DESCRIPTION OF THE DRAWINGS

These and other characteristics of the present invention will become apparent from the following description of a preferential form of embodiment, given as a non-restrictive example with reference to the attached drawings wherein:

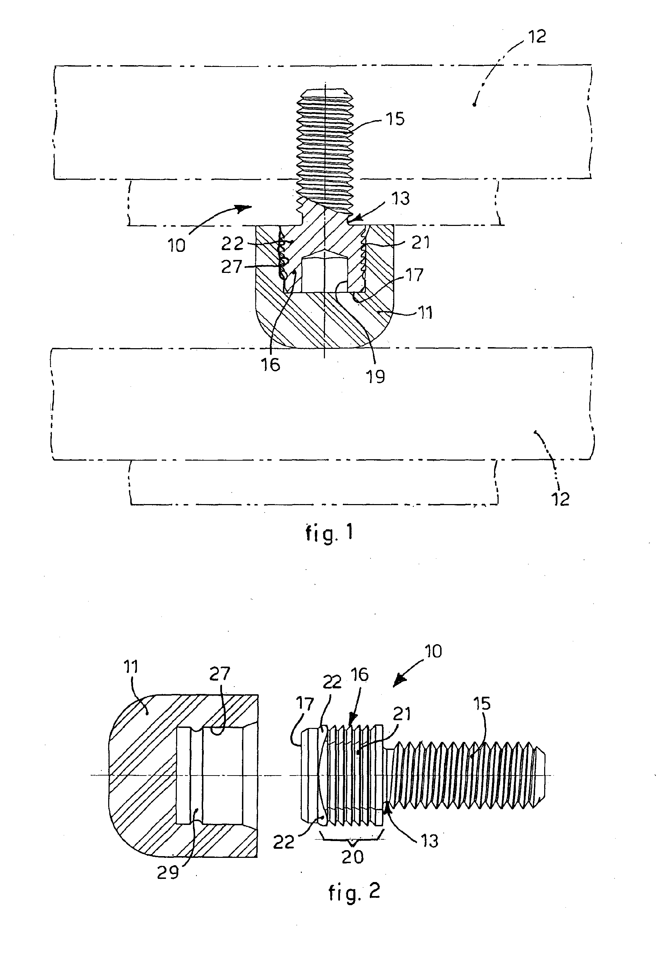

- fig. 1 shows a lateral view of an attachment element and a protection block according to the present invention, applied to a stackable structure;
- fig. 2 shows an exploded view of the attachment element and the protection block in fig. 1;
- fig. 3 shows a view from above of the attachment element in fig. 1;
- fig. 4 shows a view from above of a first variant of the attachment element in fig. 1;
- fig. 5 shows a view from above of a second variant of the attachment element in fig. 1;
- fig. 6 shows a view from above of a third variant of the attachment element in fig. 1;
- fig. 7 shows an enlarged detail of a fourth variant of the attachment element in fig. 1;
- fig. 8 shows an enlarged detail of a fifth variant of the attachment element in fig, 1;
- fig. 9 shows an enlarged detail of a sixth variant of the attachment element in fig. 1;
- fig. 10 shows an enlarged detail of a seventh variant of the attachment element in fig. 1;
- fig. 11 shows an eighth variant of the attachment element in fig. 1;
- fig. 12 shows a ninth variant of the attachment element in fig. 1;
- fig. 13 shows a tenth variant of the attachment element in fig. 1;
- fig. 14 shows an eleventh variant of the attachment element in fig. 1;
- fig. 15 shows a twelfth variant of the attachment element in fig. 1;
- fig. 16 shows a thirteenth variant of the attachment element in fig. 1;
- fig. 17 shows a fourteenth variant of the attachment element in fig. 1;

### DETAILED DESCRIPTION OF A PREFERENTIAL FORM OF EMBODIMENT

With reference to the attached drawings, an attachment element 10 is shown in its entirety to attach a protection block 11 to a stackable structure, in this case a chair 12, of the substantially known type and only partly shown by a line of dashes.

The attachment element 10 comprises a screw 13 provided with a threaded stem 15 and an anchoring head 16.

In the solution shown, the threaded stem 15 comprises a metric thread, but it is not excluded that it can equally provide a self-threading thread, gas, cylindrical, chipboard or other type, depending on the specific applications and auxiliary functions of the attachment element 10.

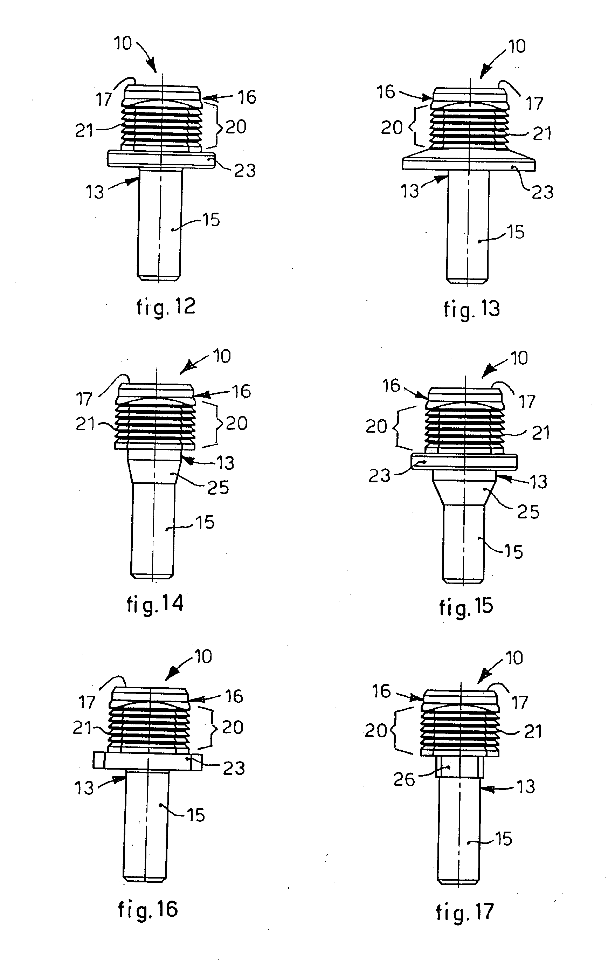

As shown in the variants shown in figs. 12 to 17, the threaded stem 15, and in particular its attachment zone to the anchoring head 16, can include, in one piece, elements with the function of washer 23, wedge parts 25, or shaped parts 26, depending on the different applications and auxiliary functions for which the screw 13 is intended.

The anchoring head 16 comprises a flat surface 17 on which a specific actuation mark 19 is stamped, in this case a cross, which allows the insertion of a corresponding screwing tool.

According to some variants, not shown, an actuation mark 19 can be provided, cut, hexagonal, torx® or other, on the flat surface.

The anchoring head 16 also comprises a lateral surface 20 provided with a plurality of indents 21 able to increase the friction conditions with the protection block 11.

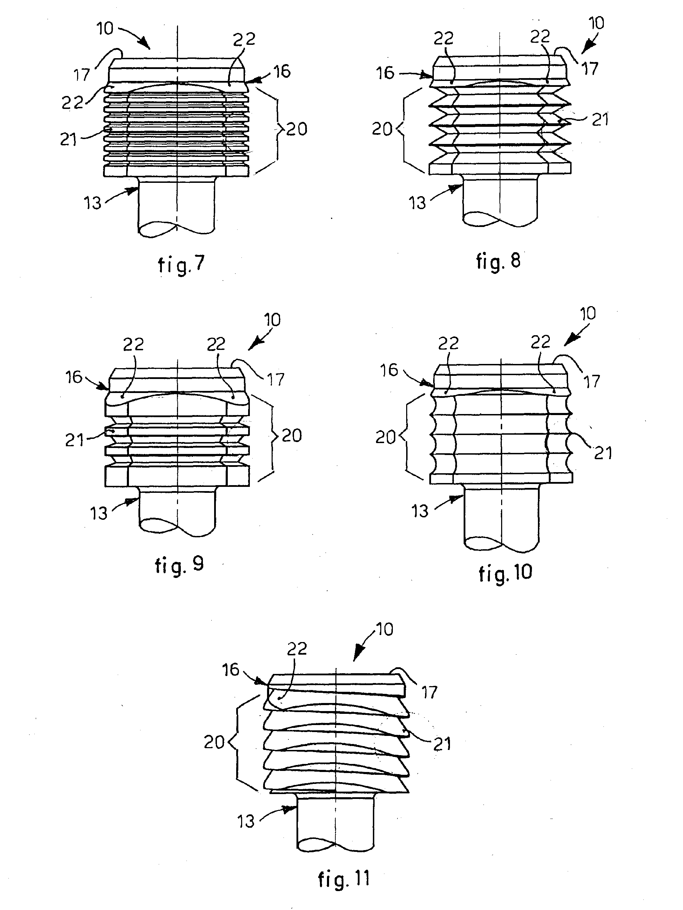

Depending on the different types of materials which make up the protection block 11 and/or the stresses and/or the reciprocal sizes of the parts, as shown in the variants in figs. 7 to 11, the indents 12 can have different conformations, depending on the specific applications and materials, or parallel, helical, inclined or other developments.

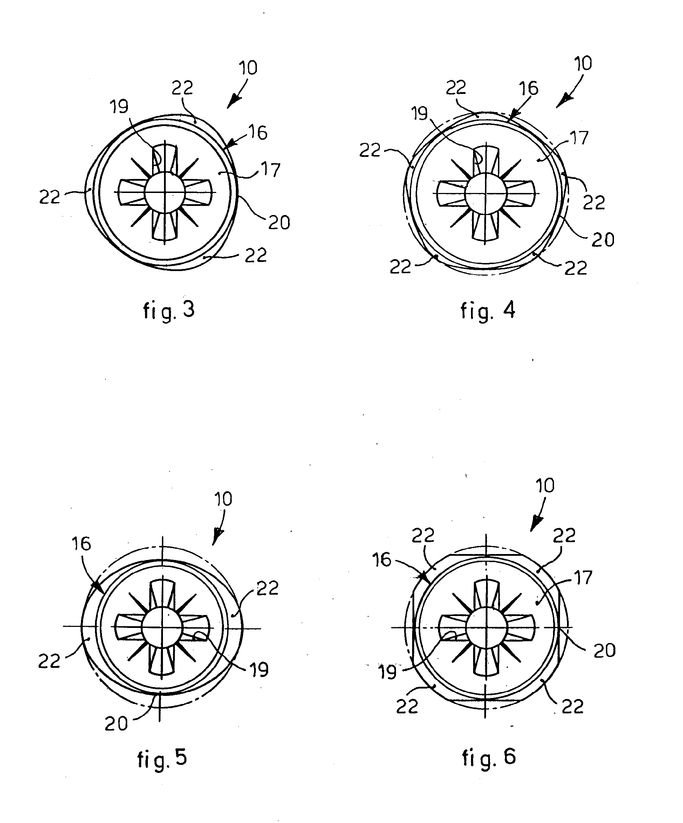

On the lateral surface 20 of the anchoring head 16 a plurality of lobes 22 extend laterally (fig. 3), in this case three at 120° with respect to each other, which protrude laterally from the bulk of the anchoring head 16.

In this case the three lobes 22 extend axially along the whole height of the anchoring head 16 and are substantially equal with respect to each other.

According to the variants shown in figs. 4, 5 and 6, screws 13 are shown, having an anchoring head 16 provided with five, two or four lobes 22.

It is not excluded that an attachment element 10 according to the present invention can be provided with an anchoring head 16 having a different number of lobes 22 than are shown here, for example, one, six or more; equally, it may be provided that the lobes 22 of the same anchoring head 16 have different sizes from each other.

The protection block 11 is made of elastomeric material, for example rubber, plastic or other, and comprises a blind housing seating 27 conformed to completely contain inside it the anchoring head 16 of the screw 13.

In particular, the housing seating has sizes substantially equal to or slightly smaller than those of the anchoring head 16, without taking into account the lateral extension of the lobes 22.

In this way, the insertion of the anchoring head 16 inside the housing seating 27 determines, by means of the action of the lobes 22, a lateral elastic deformation of the material which makes up the protection block 11.

This elastic deformation generates a contrasting elastic strength, which keeps the protection block 11 close to the anchoring head 16 of the screw 13.

In this way, the reciprocal clamping of the protection block 11 on the screw 13 is effected. This clamping is even more efficient because of the indents 21, which determines an increase in the reciprocal friction between the anchoring head 16 and the housing seating 27, substantially preventing any axial unthreading thereof.

Moreover, in this case, an annular rib 29 is made inside the housing seating 27, which in cooperation with the indent 21 of the anchoring head 16 and the elastic action effected by the protection block 11, further prevents any reciprocal axial unthreading of the protection block 11 and the screw 13.

It is clear, however, that modifications and/or additions of parts may be made to the attachment element 10, to the protection block 11 and their combination as described heretofore, without departing from the field and scope of the present invention.

It is also clear that, although the present invention has been described with reference to specific examples, a person of skill in the art shall certainly be able to achieve many other equivalent forms of attachment element for a protection block, a protection block for said attachment element and a combination of the attachment element and the protection block, having the characteristics as set forth in the claims and hence all coming within the field of protection defined thereby.

## Claims

1. Attachment element for a protection block comprising at least a central body (13) provided with an attachment stem (15) able to determine the attachment of said central body (13) to a relative support surface (12), and an anchoring head (16) conformed to cooperate with said protection block and to define the reciprocal clamping of the protection block and said central body (13), **characterized in that** said anchoring head (16) comprises at least a protruding portion (22) which extends sideways with respect to the bulk of said anchoring head (16).

2. Attachment element as in claim 1, **characterized in that** the anchoring head (16) comprises a plurality of protruding portions (22) which extend sideways to the bulk of the anchoring head (16).

3. Attachment element as in claim 1 or 2, **characterized in that** each of said protruding portions (22) extend axially along the height of the anchoring head (16).

4. Attachment element as in any claim hereinbefore, **characterized in that** the central body comprises a screw (13), the attachment stem (15) is threaded and the anchoring head (16) comprises at least a flat surface (17) on which an actuation mark (19) is provided, to allow the operative seating of a coordinated screwing tool.

5. Attachment element as in any claim hereinbefore, **characterized in that** the anchoring head (16) comprises an external surface (20) provided with knurling and/or indents (21), able to increase the reciprocal friction with the protection block (11).

6. Combination of an attachment element and a protection block, wherein said attachment element is provided with an attachment stem (15) able to determine the attachment of said central body (13) to a relative support surface (12), and an anchoring head (16) conformed to cooperate with said protection block and to define the reciprocal clamping of the protection block and said central body (13), **characterized in that** said protection block (11) comprises a blind housing seating (27) in which said anchoring head (16) is positioned and having dimensions slightly smaller than or substantially equal to those of the anchoring head (16) of said central body (13), and **in that** said anchoring head (16) comprises at least a protruding portion (22) which extends sideways with respect to the bulk of said anchoring head (16), so that in the housed condition in the housing seating (27) it is able to effect an action of elastic deformation on said protection block (11), in order to keep it clamped with respect to said central body (13).
